# EUROPÄISCHE PATENTSCHRIFT

(11) **EP 0 645 177 B1**
(45) Veröffentlichungstag und Bekanntmachung des Hinweises auf die Patenterteilung: **28.08.1996**
(21) Anmeldenummer: 94890152.5
(22) Anmeldetag: 22.09.1994
(51) Int. Cl.: B01F 3/04

(54) **Vorrichtung zur Gaseintragung in eine Flüssigkeit**
Device for introducing gas in a liquid
Dispositif pour l'introduction d'un gaz dans un liquide

(30) Priorität: 29.09.1993 AT 1959/93
(43) Veröffentlichungstag der Anmeldung: 29.03.1995
(73) Patentinhaber: Heinrich Frings GmbH & Co. KG, D-53115 Bonn (DE)
(72) Erfinder: Ebner, Heinrich, Dr., A-4020 Linz (DE); Golob, Karl, Dr., D-53175 Bonn (DE); Ditscheid, Konrad, Dipl.-Ing., D-53127 Bonn (DE)
(74) Vertreter: Hübscher, Heiner, Dipl.-Ing.

(56) Entgegenhaltungen:
- EP-A- 0 587 553
- AT-A- 319 865
- DE-A- 1 965 771
- DE-A- 2 559 236
- DE-A- 2 602 119
- DE-A- 3 635 642
- FR-A- 2 405 090
- GB-A- 724 791
- GB-A- 1 192 796
- GB-A- 2 000 039
- PATENT ABSTRACTS OF JAPAN vol. 17, no. 123 (M-1380)15. März 1993 & JP-A-04 306 394 (TOUYOU DENKI)

## Beschreibung

Die Erfindung bezieht sich auf eine Vorrichtung zur Gaseintragung in eine Flüssigkeit mit einem im Bodenbereich eines Flüssigkeitsbehälters angeordneten, um eine vertikale Achse drehbar gelagerten, hohlen, sternförmigen Rotor, dessen Hohlraum stirnseitig an eine Gaszuleitung angeschlossen ist und der an den bezüglich seiner Drehrichtung hinteren Flanken der Sternarme Gasaustrittsöffnungen aufweist, mit einem Flüssigkeitszulauf zu einer der beiden Stirnseiten des Rotors und mit einem den Rotor umgebenden Stator aus Strömungskanälen für das sich bildende Gas-Flüssigkeitsgemisch.

Um nach einer Reinigung von Abwässern durch einen oxidativen Abbau der enthaltenen organischen Substanzen auch den dann noch im Abwasser verbliebenen Stickstoff durch eine anaerobe Nachbehandlung entfernen zu können, muß das Abwasser vorsichtig durchmischt werden, damit der gebildete Schlamm in Schwebe gehalten wird. Da für die anaerobe Nachbehandlung des Abwassers ein Eintrag von Luftsauerstoff über die Wasseroberfläche möglichst unterbunden werden soll, ist bei der Durchmischung des Abwassers auf eine möglichst ruhige Wasseroberfläche zu achten.

Zur Gaseintragung in eine Flüssigkeit ist es bekannt (AT-A-319 865), einen hohlen, sternförmigen Rotor einzusetzen, dessen Hohlraum stirnseitig an eine Gaszuleitung angeschlossen ist und der an den bezüglich seiner Drehrichtung hinteren Flanken der Sternarme Gasaustrittsöffnungen aufweist, so daß durch diesen um eine vertikale Achse umlaufenden Rotor Gas durch die Gaszuleitung angesaugt wird, das durch die Gasaustrittsöffnungen an den hinteren Flanken der Sternarme ausströmt und sich mit der durch den Rotor axial angesaugten Flüssigkeit mischt. Das sich bildende Gas-Flüssigkeitsgemisch wird durch Strömungskanäle eines den Rotor umgebenden Stators in das diese Belüftungseinrichtung aufnehmende Flüssigkeitsbecken ausgestoßen, wobei die Gasbläschen in einer feinen Verteilung über den Austoßbereich des Gas-Flüssigkeitsgemisches in der Flüssigkeit aufsteigen. Diese bekannte Vorrichtung eignet sich zwar in vorteilhafter Weise zur Gaseintragung in eine Flüssigkeit, nicht aber für eine begrenzte Rührwirkung bei geschlossener Gaszuleitung. Da die Pumpleistung für die beschränkte Rührwirkung zu groß ist, ergibt sich ein zu hoher Kraftbedarf. Die Pumpleistung könnte zwar durch eine Drehzahlsteuerung an die erforderliche Rührwirkung angepaßt werden, doch ist eine solche Drehzahlsteuerung aufwendig. Außerdem ist es schwierig, eine befriedigende Abstimmung der Belüftung mit einer vorgegebenen Luftmenge und der von der jeweiligen Beckengröße abhängigen Umpumpleistung zu erreichen.

Siehe auch EP-A-0 587 553 (Veröffentlichungstag der Anmeldung: 16/03/94).

Der Erfindung liegt somit die Aufgabe zugrunde, eine Vorrichtung zum wahlweisen Eintragen von Gas in eine Flüssigkeit oder zum Umrühren dieser Flüssigkeit zu schaffen, wobei sowohl hinsichtlich der Gaseintragung als auch des Umpumpens der Flüssigkeit vorteilhafte Verhältnisse in wirtschaftlicher Weise sichergestellt werden sollen.

Ausgehend von einer Vorrichtung zur Gaseintragung in eine Flüssigkeit der eingangs geschilderten Art löst die Erfindung die gestellte Aufgabe dadurch, daß in den Zwickelbereichen zwischen den Sternarmen des Rotors Leitwände zur Trennung des aus den Gasaustrittsöffnungen austretenden Gasstromes und der Strömung des Flüssigkeitszulaufes vorgesehen sind.

Der Erfindung liegt die Erkenntnis zugrunde, daß beim Absperren der Gaszuleitung der Kraftbedarf gattungsgemäßer Vorrichtungen zur Gaseintragung im Vergleich zu theoretischen Überlegungen wesentlich stärker als erwartet ansteigt, und zwar deshalb, weil beim Absperren der Gaszuleitung wegen des dann im Rotor auftretenden verstärkten Soges durch die Gasaustrittsöffnungen Flüssigkeit in den hohlen Rotor zurückgesaugt wird, die mit dem Rotor umläuft.

Durch die Leitwände in den Zwickelbereichen zwischen den Sternarmen des Rotors wird nunmehr das Rücksaugen der Flüssigkeit in den Rotor bei abgesperrter Gaszuleitung weitgehend verhindert, so daß der Kraftbedarf für das Umpumpen der Flüssigkeit ohne Gaseintragung nur wenig ansteigt. Dadurch wird es möglich, den Antrieb des Rotors für den Kraftbedarf der Flüssigkeitsumwälzung auszulegen, ohne eine wirtschaftlich nicht vertretbare Überdimensionierung des Antriebes für die Gaseintragung in Kauf nehmen zu müssen. Aufgrund der Abschirmung der Gasaustrittsöffnungen gegenüber der Flüssigkeit kann diese nur auf der von den Gasaustrittsöffnungen abgekehrten Seite der Leitwände zuströmen. Sie kann entsprechend den jeweiligen Anforderungen entweder axial von oben oder von unten angesaugt werden, nicht aber von beiden Stirnseiten her.

Die Leitwände zwischen der Gasströmung aus den Gasaustrittsöffnungen und der Strömung des Flüssigkeitszulaufes bedingen bei geöffneter Gaszuleitung, daß die Mischung von Gas und Flüssigkeit mehr in den Statorbereich verlagert wird, was jedoch keine nachteiligen Auswirkungen auf die feine Verteilung der Gasbläschen in der aus dem Stator ausgestoßenen Flüssigkeit hat.

Um die Leitwände in strömungstechnisch vorteilhafter Weise anzuordnen, können die Leitwände, die im Bereich der dem Flüssigkeitszulauf zugekehrten Stirnseite des Rotors an die Flanken der Sternarme anschließen, in Umfangsrichtung gegen die andere Stirnseite des Rotors hin geneigt verlaufen und sich zumindest über die halbe Rotorhöhe erstrecken. Die axial in die Zwickelbereiche zwischen den Sternarmen des Rotors strömende Flüssigkeit wird entlang der in diesen Zwickelbereichen vorgesehenen Leitwände umgelenkt und in die Strömungskanäle des Stators gedrückt. Besonders vorteilhafte Verhältnisse ergeben sich dabei, wenn die Leitwände in Umfangsrichtung unter einem Neigungswinkel verlaufen, der der Einströmrichtung der Flüssigkeit entspricht. Diese Einströmrichtung setzt sich aus der von der Füllhöhe des Flüssigkeitsbehälters abhängigen axialen Geschwindigkeit der in den Rotor strömenden Flüssigkeit und aus der Umlaufgeschwindigkeit des Rotors zusammen. In jedem Fall muß dafür gesorgt werden, daß eine entsprechende Flüssigkeitsströmung in die Strömungskanäle des Stators gewährleistet ist, was eine Erstreckung der Leitwände zumindest über die halbe Rotorhöhe erforderlich macht. In der Praxis werden die Leitwände üblicherweise über einen Großteil der Rotorhöhe verlaufen.

Damit ein vorteilhafter Abschirmeffekt erreicht und ein Rücksaugen von Flüssigkeit in den hohlen Rotor bei geschlossener Gaszuleitung verhindert wird, müssen die Leitwände eine weitgehende Trennung zwischen der Gasströmung und der Flüssigkeitsströmung im Zwickelbereich zwischen den Sternarmen des Rotors sicherstellen. Zu diesem Zweck können die Außenkanten der Leitwände entlang eines um den Rotor gelegten Hüllzylinders verlaufen, so daß sich ein entsprechender Anschluß der Leitwände an den Stator ergibt.

Die Auslegung des Rotorantriebes auf den Kraftbedarf für das Umwälzen der Flüssigkeit ohne Gaseintragung läßt den wahlweisen Betrieb der Vorrichtung zur Flüssigkeitsumwälzung oder zur Gaseintragung mit gleicher Rotordrehzahl zu, was besonders einfache Konstruktionsbedingungen schafft und für beide Betriebsarten eine gute Antriebsauslastung sichert. In diesem Zusammenhang ist zu berücksichtigen, daß die Umlaufgeschwindigkeiten des Rotors im allgemeinen so gewählt werden, daß bei der gegebenen Füllhöhe des Flüssigkeitsbehälters ohne Vordruck kein Gas angesaugt werden kann. Für die Gaseintragung ergibt sich je nach dem gewählten Vordruck für das zuzuführende Gas ein Kraftbedarf, der etwa dem 0,7fachen Kraftbedarf für die Flüssigkeitsumwälzung entspricht.

Damit der Kraftbedarf niedrig gehalten werden kann, müssen große Flüssigkeitsmengen mit kleinen Geschwindigkeiten bewegt werden. Daraus ergibt sich eine Forderung nach möglichst niedrigen Rotordrehzahlen und größeren Rotorabmessungen. Um dieser Forderung zu genügen, soll die Drehzahl des Rotors höchstens 600 U/min, vorzugsweise zwischen 150 und 500 U/min, betragen.

Durch eine ungleichmäßige Gasverteilung über die Grundfläche des Flüssigkeitsbehälters ergibt sich im Bereich größerer Gasmengen aufgrund der durch den Gasauftrieb bewirkten größeren Flüssigkeitsströmung eine kürzere Verweilzeit der Gasbläschen in der Flüssigkeit und damit eine geringere Wechselwirkung zwischen dem Gas und der Flüssigkeit. Demgemäß ist für eine besonders gleichmäßige Gasverteilung über den Behälterquerschnitt zu sorgen. Zu diesem Zweck können die Strömungskanäle des Stators durch angeschlossene Verteilerrohre verlängert werden, die nach oben gerichtete Verteileröffnungen aufweisen. Durch die Verteilerrohre ergibt sich eine größere Ausstoßweite für das Gas-Flüssigkeitsgemisch. Die nach oben gerichteten Verteileröffnungen erlauben dabei einen über die Verteilerrohrlänge verteilten Gasaustritt, wobei eine Vereinigung der feinen Gasbläschen zu größeren Gasblasen innerhalb der Verteilerrohre verhindert wird. Bei einer reinen Flüssigkeitsförderung ohne Gaseintragung entweicht ebenfalls ein Teil des Flüssigkeitsstromes aus den Verteilerrohren durch die vorgesehenen Verteileröffnungen, was sich vorteilhaft auf die begrenzte Rührwirkung im Erstreckungsbereich der Verteilerrohre auswirkt.

Da der Druck in den Verteilerrohren nach außen abnimmt und sich die zu belüftende Behälterfläche zugleich vergrößert, kann sich der Durchtrittsquerschnitt der Verteileröffnungen über die Rohrlänge gegen das Außenende hin vergrößern, so daß einerseits bei einem Gaseintrag eine weitgehend über den Behälterquerschnitt gleichbleibende Gasverteilung und anderseits bei einer Flüssigkeitsumwälzung ohne Gaseintragung eine beschränkte Rührwirkung sichergestellt werden können. Besonders einfache Konstruktionsverhältnisse ergeben sich in diesem Zusammenhang, wenn die Verteileröffnungen aus Längsschlitzen auf der Oberseite der Verteilerrohre bestehen.

In der Zeichnung ist der Erfindungsgegenstand beispielsweise dargestellt. Es zeigen
- Fig. 1: eine erfindungsgemäße Vorrichtung zur Gaseintragung in eine Flüssigkeit ausschnittsweise in einer zum Teil aufgerissenen Seitenansicht,
- Fig. 2: diese Vorrichtung in einem schematischen Schnitt entsprechend der Linie II-II der Fig. 1,
- Fig. 3: eine vereinfachte perspektivische Darstellung des Rotors einer erfindungsgemäßen Vorrichtung in einem größeren Maßstab,
- Fig. 4: eine Konstruktionsvariante in einem Axialschnitt durch den Rotor,
- Fig. 5: eine weitere Konstruktionsvariante in einer der Fig. 4 entsprechenden Darstellung und
- Fig. 6: Kennlinien, die die Abhängigkeit der Kraftaufnahme des Rotorantriebes von der geförderten Luftmenge bei einem Rotor mit und ohne Leitwände zeigen.

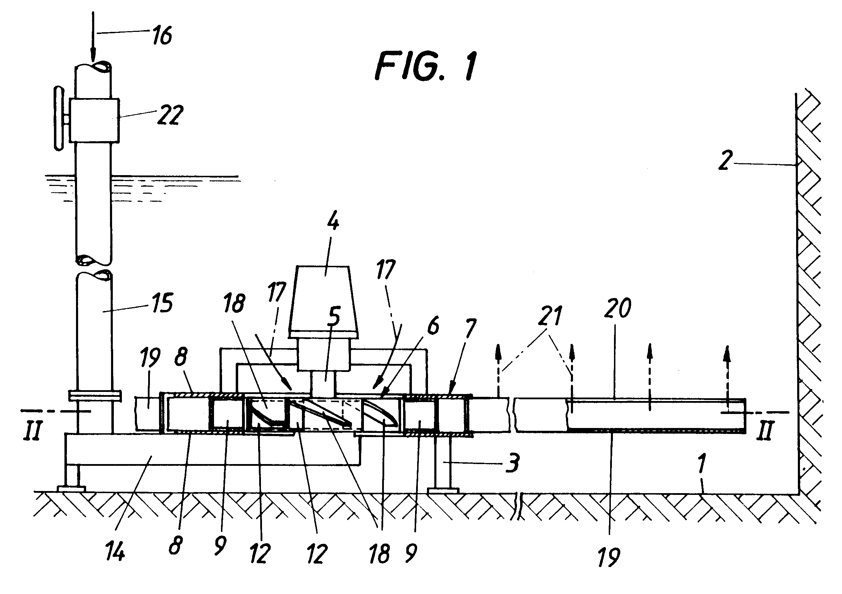

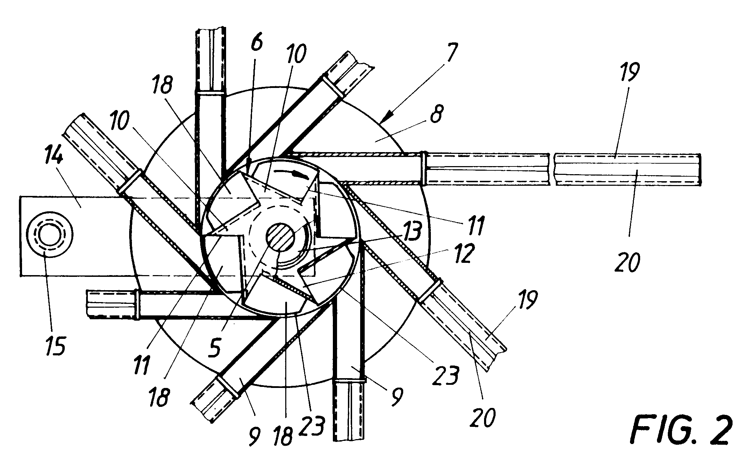

Gemäß dem dargestellten Ausführungsbeispiel nach den Fig. 1 bis 3 besteht die Vorrichtung zur Gaseintragung in eine Flüssigkeit im wesentlichen aus einem auf dem Boden 1 eines beckenförmigen Flüssigkeitsbehälters 2 vorgesehenen Gestell 3, das einen Getriebemotor 4 mit einer Welle 5 zum Antrieb eines Rotors 6 trägt, und aus einem den Rotor 6 umgebenden Stator 7, der zwischen zwei Ringscheiben 8 Strömungskanäle 9 bildet, deren Achsen in Drehrichtung des Rotors 6 gegenüber der zugehörigen Radialen geneigt verlaufen, wie dies der Fig. 2 entnommen werden kann. Der Rotor 6 ist hohl ausgebildet und weist eine sternförmige Form mit Sternarmen 10 auf, deren in Drehrichtung des Rotors 6 hintere Flanken 11 vorzugsweise in Axialebenen verlaufen und Gasaustrittsöffnungen 12 bilden. Der Hohlraum des Rotors 6 steht über wenigstens eine Durchtrittsöffnung 13 in der unteren Stirnseite des Rotors 6 mit einem Gasanschlußkasten 14 in Verbindung, in den eine Gaszuleitung 15 mündet. Während das einzutragende Gas 16, im allgemeinen Luft, über ein nicht dargestelltes Gebläse unter Vordruck über den Gasanschlußkasten 14 auf der Statorunterseite zugeführt wird, ist der Flüssigkeitszulauf auf der Statoroberseite vorgesehen, wie dies durch die Strömungspfeile 17 angedeutet wird.

Im Gegensatz zu bekannten Rotoren dieser Art sind in den Zwickelbereichen zwischen den Sternarmen 10 Leitwände 18 vorgesehen, die zumindest im Bereich der Gasaustrittsöffnungen 12 eine Trennung zwischen der von oben entsprechend den Pfeilen 17 zuströmenden Flüssigkeit aus dem Flüssigkeitsbehälter 1 und der aus den Gasaustrittsöffnungen 12 austretenden Gasströmung 16 bewirken. Die innige Mischung der in die Zwickelbereiche zwischen den Sternarmen 10 des Rotors 6 strömenden Flüssigkeit und des angesaugten Gases erfolgt dann im wesentlichen innerhalb der Strömungskanäle 9 des Stators 7, durch die das Gas-Flüssigkeitsgemisch ausgestoßen wird.

Um vorteilhafte Austragsbedingungen für das Gas-Flüssigkeitsgemisch sicherzustellen, können an die Strömungskanäle 9 des Stators 7 Verteilerrohre 19 angeschlossen werden, die auf ihrer Oberseite Verteileröffnungen 20 in Form eines Längsschlitzes aufweisen, der sich vorzugsweise gegen das äußere Ende der Verteilerrohre hin verbreitert. Das aus den Strömungskanälen 9 austretende Gas-Flüssigkeitsgemisch wird folglich innerhalb der Verteilerrohre 19 weitergeleitet, wobei durch den Längsschlitz 20 Gasbläschen über die Länge der Verteilerrohre verteilt in die Behälterflüssigkeit aufsteigen, wie dies durch die Pfeile 21 in der Fig. 1 angedeutet ist. Durch diese Maßnahme wird erreicht, daß sich eine gleichmäßige Verteilung feiner Gasbläschen in der Behälterflüssigkeit über den gesamten radialen Erstreckungsbereich der Verteilerrohre 19 ergibt, die zum einfacheren Einbau um horizontale Querachsen am Stator 7 hochschwenkbar angelenkt sein können, was jedoch aus Übersichtlichkeitsgründen nicht näher dargestellt ist.

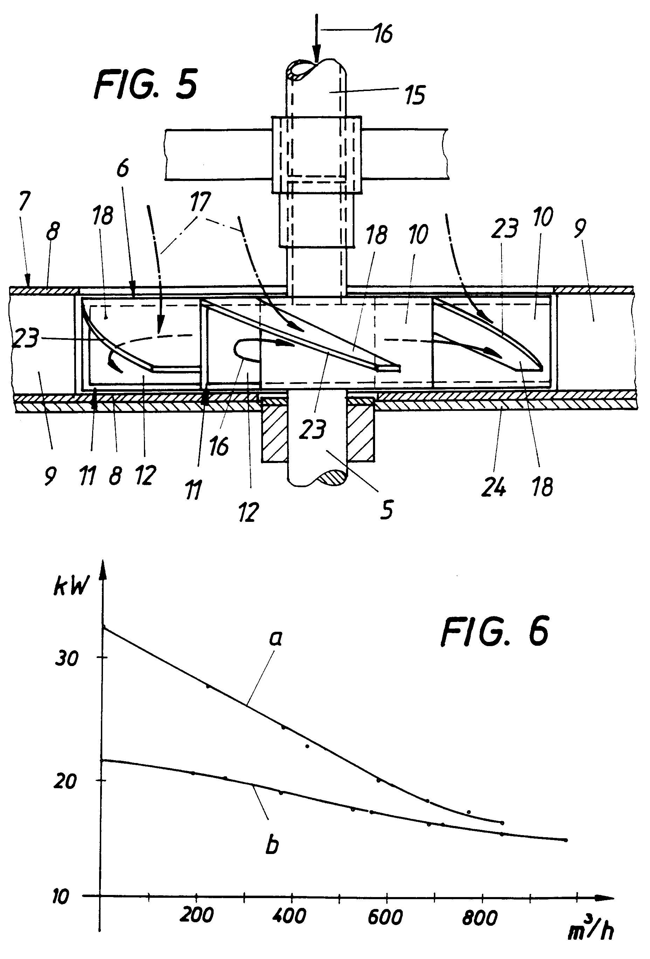

Um mit der dargestellten Vorrichtung eine beispielsweise für eine Denitrifikation vorteilhafte Flüssigkeitsumwälzung ohne Gaseintragung zu erreichen, braucht lediglich ein in die Gaszuleitung 15 eingeschaltetes Ventil 22 geschlossen zu werden, so daß über den Rotor 6 kein Gas mehr angesaugt werden kann. Die Leitwände 18 verhindern dabei, daß aufgrund des bei geschlossener Gaszuleitung 15 verstärkten Soges im hohlen Rotor 6 Flüssigkeit in größeren Mengen durch die Gasaustrittsöffnungen 12 an den hinteren Flanken 11 in den Rotor gesaugt wird und mit diesem umläuft, was den Kraftbedarf für die Pumpwirkung ohne Gaseintrag erheblich vergrößern würde, wie dies den Kennlinien der Fig. 6 entnommen werden kann. Diese Kennlinien zeigen für einen bestimmten Rotor die Abhängigkeit der Kraftaufnahme des Rotorantriebes von der eingetragenen Gasmenge, wobei die unterschiedlichen Verhältnisse für einen Rotor mit und ohne den Leitwänden 18 einander gegenübergestellt werden. Aus der Kennlinie a, die die Verhältnisse bei einem Rotor ohne Leitwände 18 zeigt, erkennt man, daß mit zunehmender Gaseintragung der Kraftbedarf stark abfällt, während die Kennlinie b, die für den gleichen Rotor, jedoch mit Leitwänden 18 aufgenommen wurde, einen wesentlich flacheren Verlauf aufweist, woraus der gegenüber der Kennlinie a erheblich geringere Kraftbedarf für eine Flüssigkeitsumwälzung ohne Gaseintrag (Belüftungsrate = 0 m³/h) ersichtlich wird. Selbst bei höheren Belüftungsraten ergeben sich günstigere Verhältnisse.

Damit eine entsprechende Trennung zwischen der Gasströmung 16 und der Flüssigkeitsströmung 17 sichergestellt werden kann, schließen die Leitwände 18 im Bereich der dem Flüssigkeitszulauf zugekehrten Stirnseite des Rotors 6 an die hinteren Flanken 11 an und verlaufen in Umfangsrichtung gegen die andere Stirnseite des Rotors hin. Die Außenkante 23 der Leitwände 18 grenzt dabei vorteilhaft an einen um den Rotor gelegten Hüllzylinder, wie dies insbesondere der Fig. 2. entnommen werden kann.

Wegen der notwendigen Abschirmung der Gasaustrittsöffnungen 12 von der zuströmenden Flüssigkeit kann der Flüssigkeitszulauf nur von einer der beiden Stirnseiten des Rotors 6 her erfolgen, wobei der Flüssigkeitszulauf von oben oder von unten den jeweiligen Anforderungen entsprechend gewählt werden kann. Die Gaszuführung in den Rotor kann beliebig, daher auch von beiden Stirnseiten her erfolgen. Gemäß dem Ausführungsbeispiel nach den Fig. 1 bis 3 wird das Gas von unten und die Flüssigkeit von oben zugeführt, wobei der Rotorantrieb oberhalb des Rotors 6 vorgesehen ist. Die Leitwände fallen demnach entgegen der Rotordrehrichtung nach unten ab.

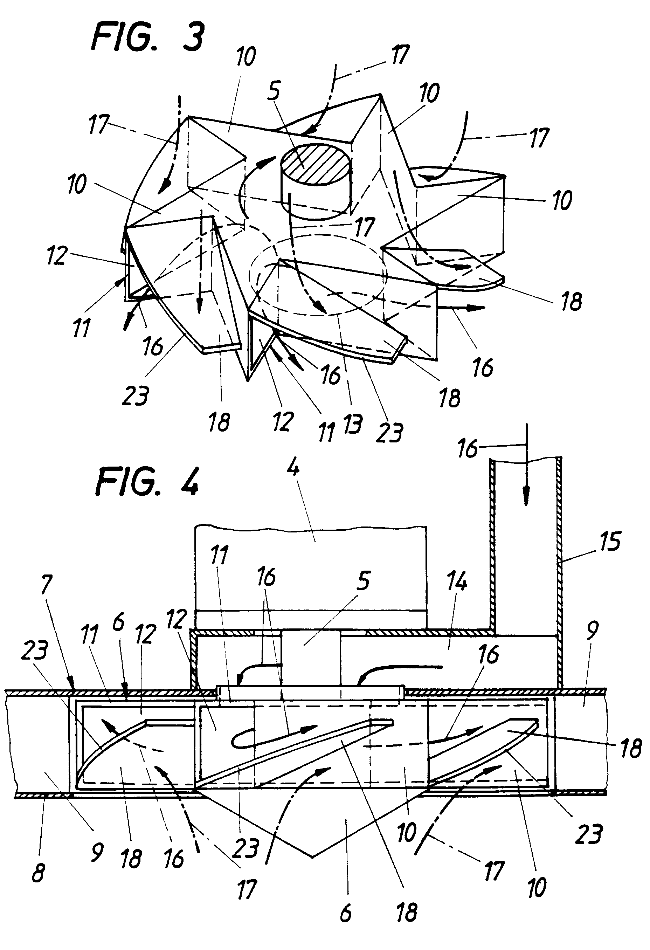

Die Fig. 4 zeigt eine den Fig. 1 bis 3 entsprechende Anordnung, bei der jedoch der Flüssigkeitszulauf von unten erfolgt, während das Gas von oben in den Rotor strömt. Der Gasanschlußkasten 14 wird demnach von der Rotorwelle 5 durchsetzt. Die Leitwände 18 müssen in diesem Falle gegen die Rotordrehrichtung von der unteren Stirnseite gegen die obere Stirnseite des Rotors hin ansteigen, um ein Rücksaugen der Flüssigkeit in den hohlen Rotor bei geschlossener Gasleitung 15 zu verhindern. In der Fig. 5 ist ein weiteres Ausführungsbeispiel dargestellt, bei dem die Rotorwelle 5 den Behälterboden 24 durchsetzt und der Stator 7 unmittelbar auf den Behälterboden aufgesetzt ist. Demzufolge erfolgt sowohl die Gaszuführung als auch der Flüssigkeitszulauf von oben. Die Leitwände fallen wegen des Flüssigkeitszulaufes von oben entgegen der Rotordrehrichtung ab.

Um einen zylindrischen Abwasserbehälter von 9,1 m Durchmesser und einer Füllhöhe von 6,3 m mit 840 m³/h Luft zu belüften, wurde eine erfindungsgemäße Vorrichtung eingesetzt, deren Rotor einen Außendurchmesser von 540 mm und eine Höhe von 85 mm aufwies. Der Stator hatte zehn Kanäle mit einem rechteckigen Querschnitt von 90 × 100 mm. Der Außendurchmesser des Stators betrug 1050 mm. Diese Strömungskanäle waren durch 2 m lange Verteilerrohre verlängert, die mit einem durchgehenden Längsschlitz von 10 mm versehen waren. Der Vordruck der einzutragenden Luft wurde mittels eines Gebläses auf 453 mbar eingestellt. Mit Hilfe eines Getriebemotors mit einer Nennleistung von 22 kW wurde der Rotor mit 346 U/min angetrieben, wobei 840 m³/h Luft gefördert und über die Grundfläche des Abwasserbehälters gleichmäßig verteilt wurden. Die Dichte des Gas-Flüssigkeitsgemisches betrug 706 kg/m³. Der Kraftbedarf des Belüfters betrug 15,1 kW, der des Gebläses 15,3 kW, so daß sich ein gesamter Kraftbedarf von 30,4 kW ergab. Die eingetragene Sauerstoffmenge betrug 72,8 kg O₂/h, woraus sich ein Sauerstoffertrag von 2,39 kg O₂/kWh errechnet.

Zum Umschalten auf eine Flüssigkeitsumwälzung ohne Gaseintragung wurde lediglich das Gebläse abgestellt und die Gaszuleitung geschlossen. Bei gleicher Drehzahl des Rotors wurde Wasser in einer Menge von 1860 m³/h bei einem Kraftbedarf von 21,6 kW gefördert, was ausreichend war, um den Schlamm im Abwasserbehälter in Schwebe zu halten, und zwar ohne die Wasseroberfläche in einer für die anaerobe Stickstoffabscheidung nachteiligen Art zu bewegen.

## Patentansprüche

1. Vorrichtung zur Gaseintragung in eine Flüssigkeit mit einem im Bodenbereich eines Flüssigkeitsbehälters (1) angeordneten, um eine vertikale Achse drehbar gelagerten, hohlen, sternförmigen Rotor (6), dessen Hohlraum stirnseitig an eine Gaszuleitung (15) angeschlossen ist und der an den bezüglich seiner Drehrichtung hinteren Flanken (11) der Sternarme (10) Gasaustrittsöffnungen (12) aufweist, mit einem Flüssigkeitszulauf (17) zu einer der beiden Stirnseiten des Rotors (6) und mit einem den Rotor (6) umgebenden Stator (7) aus Strömungskanälen (9) für das sich bildende Gas-Flüssigkeitsgemisch, dadurch gekennzeichnet, daß in den Zwickelbereichen zwischen den Sternarmen (10) des Rotors (6) Leitwände (18) zur Trennung des aus den Gasaustrittsöffnungen (12) austretenden Gasstromes (16) und der Strömung des Flüssigkeitszulaufes (17) vorgesehen sind.

2. Vorrichtung nach Anspruch 1, dadurch gekennzeichnet, daß die Leitwände (18), die im Bereich der dem Flüssigkeitszulauf (17) zugekehrten Stirnseite des Rotors (6) an die hinteren Flanken (11) der Sternarme (10) anschließen, in Umfangsrichtung gegen die andere Stirnseite des Rotors (6) hin geneigt verlaufen und sich zumindest über die halbe Rotorhöhe erstrecken.

3. Vorrichtung nach Anspruch 1 oder 2, dadurch gekennzeichnet, daß die Außenkanten (23) der Leitwände (18) entlang eines um den Rotor (6) gelegten Hüllzylinders verlaufen.

4. Vorrichtung nach einem der Ansprüche 1 bis 3, dadurch gekennzeichnet, daß der Rotor (6) bei wahlweise offener oder geschlossener Gaszuleitung (15) mit der gleichen Drehzahl umläuft.

5. Vorrichtung nach einem der Ansprüche 1 bis 4, dadurch gekennzeichnet, daß die Drehzahl des Rotors (6) höchstens 600 U/min beträgt.

6. Vorrichtung nach einem der Ansprüche 1 bis 5, dadurch gekennzeichnet, daß die Strömungskanäle (9) des Stators (7) durch angeschlossene Verteilerrohre (19) verlängert sind, die nach oben gerichtete Verteileröffnungen (20) aufweisen.

7. Vorrichtung nach Anspruch 6, dadurch gekennzeichnet, daß der Durchtrittsquerschnitt der Verteileröffnungen (20) sich über die Rohrlänge gegen das äußere Ende der Verteilerrohre (19) hin vergrößert.

8. Vorrichtung nach Anspruch 6 oder 7, dadurch gekennzeichnet, daß die Verteileröffnungen (20) aus Längsschlitzen auf der Oberseite der Verteilerrohre (19) bestehen.

## Claims

1. A device for introducing gas into a liquid, comprising a hollow star-shaped rotor (6) mounted for rotation around a vertical axis and disposed in the base region of a liquid container (1), the rotor cavity being connected at its end to a gas pipe (15) and having gas outlet openings (12) on the rear flanks (11), relative to the direction of rotation, of the arms (10) of the star, the device also comprising an inlet (17) for liquid at one of the two end faces of the rotor (6) and a stator (7) surrounding the rotor (6) and comprising flow ducts (9) for the gas-liquid mixture being formed, characterised in that baffles (18) for separating the gas flow (16) leaving the openings (12) from the flow into the inlet (17) for liquid are provided in the wedge-like regions between the arms (10) of the star-shaped rotor (6).

2. A device according to claim 1, characterised in that the baffles (18), which adjoin the rear flanks (11) of the arms (10) in the region of the end face of the rotor (6) facing the inlet (17), are inclined in the peripheral direction towards the other end face of the rotor (6) and extend at least half way up the rotor.

3. A device according to claim 1 or 2, characterised in that the outer edges (23) of the baffles (18) extend along an envelope cylinder around the rotor (6).

4. A device according to any of claims 1 to 3, characterised in that the rotor (6) rotates at the same speed, whether the gas feed pipe (15) is open or closed.

5. A device according to any of claims 1 to 4, characterised in that the maximum speed of the rotor (6) is 600 rpm.

6. A device according to any of claims 1 to 5, characterised in that the flow ducts (9) in the stator (7) are prolonged by connected distribution pipes (19) which have upwardly directed distribution openings (20).

7. A device according to claim 6, characterised in that the flow cross-section of the openings (20) widens along the distribution pipes (19) towards the outer end thereof.

8. A device according to claim 6 or 7, characterised in that the openings (20) comprise longitudinal slots on the top surface of the distribution pipes (19).

## Revendications

1. Dispositif pour l'introduction d'un gaz dans un liquide, avec un rotor (6) en étoile, creux, tourillonnant autour d'un axe vertical et disposé dans la zone de fond d'un récipient de liquide (1), rotor dont l'espace creux est raccordé côté frontal à une conduite d'amenée de gaz (15) et qui présente sur les flancs (11), situés à l'arrière par rapport a son sens de rotation, des rayons d'étoile (10) des ouvertures de sortie de gaz (12), avec une amenée de liquide (17) aboutissant à l'une des deux faces frontales du rotor (6) et avec un stator (7) entourant le rotor (6) et constitué de canaux d'écoulement (9) pour le mélange gaz-liquide se constituant, caractérisé en ce que dans les zones intermédiaires se trouvant entre les rayons d'étoile (10) du rotor (6) sont prévues de parois de guidage (18) destinées à assurer la séparation du courant de gaz (16) sortant des ouvertures de sortie de gaz (12) et de l'écoulement de l'amenée de liquide (17).

2. Dispositif selon la revendication 1, caractérisé en ce que les parois de guidage (18) qui, dans la zone de la face frontale, tournée vers l'amenée de liquide (17), du rotor (6) , se raccordent aux flancs arrière (11) des rayons d'étoile (10), courent de façon inclinée dans la direction périphérique, vers l'autre face frontale du rotor (6) et s'étendent au moins sur la demi-hauteur du rotor.

3. Dispositif selon la revendication 1 ou 2, caractérisé en ce que les arêtes extérieures (23) des parois de guidage (18) courent le long d'un cylindre d'enveloppe posé autour du rotor (6).

4. Dispositif selon l'une des revendications 1 à 3, caractérisé en ce que le rotor (6) tourne à la même vitesse de rotation, lorsque la conduite d'amenée de gaz (15) est au choix ouverte ou fermée.

5. Dispositif selon l'une des revendications 1 à 4, caractérisé en ce que la vitesse de rotation du rotor (6) est au plus de 600 tr/min.

6. Dispositif selon l'une des revendications 1 à 5, caractérisé en ce que les canaux d'écoulement (9) du stator (7) sont prolongés par des tubes distributeurs (19) raccordés, présentant des ouvertures distributrices (20) orientées vers le haut.

7. Dispositif selon la revendication 6, caractérisé en ce que la section transversale de passage des ouvertures distributrices (20) va en s'agrandissant sur la longueur du tube, en allant vers l'extrémité extérieure des tubes distributeurs (19).

8. Dispositif selon la revendication 6 ou 7, caractérisé en ce que les ouvertures distributrices (20) sont constituées de fentes longitudinales ménagées en face supérieure des tubes distributeurs (19).
